(19) Europäisches Patentamt
European Patent Office
Office européen des brevets

(11) **EP 4 339 862 A1**

(12) # EUROPEAN PATENT APPLICATION
published in accordance with Art. 153(4) EPC

(43) Date of publication:
**20.03.2024 Bulletin 2024/12**

(21) Application number: **22807563.6**

(22) Date of filing: **13.05.2022**

(51) International Patent Classification (IPC):
***G06Q 10/08*** (2024.01)

(52) Cooperative Patent Classification (CPC):
**G06Q 10/08**

(86) International application number:
**PCT/JP2022/020232**

(87) International publication number:
**WO 2022/239865 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.05.2021 JP 2021081737**

(71) Applicant: **Asahi Kasei Kabushiki Kaisha
Tokyo 100-0006 (JP)**

(72) Inventor: **KAMIYAMA, Kenji
Tokyo 100-0006 (JP)**

(74) Representative: **Hoffmann Eitle
Patent- und Rechtsanwälte PartmbB
Arabellastraße 30
81925 München (DE)**

(54) **STORAGE ASSISTING METHOD, STORAGE ASSISTING DEVICE, AND PROGRAM**

(57) The purpose of the present invention is to provide a storage assisting method implemented by a computer to assist storage, after arrival at a destination, of an object to be transported. This method includes acquisition steps S1 and S2 of acquiring request information containing information on the type and quantity of an object, a destination, and a scheduled receiving time for the object, and location information on a movable member within a container for packing the object, the movable member forming a heat-insulated closed space within the container; a heat amount calculation step S3 of calculating an amount of heat the object receives until the scheduled receiving time after arrival at the destination on the basis of the request information, and information on the current temperature of the object and the heat transfer area of the container calculated on the basis of the location information; a refrigerant quantity calculation step S4 of calculating a refrigerant quantity required for storing the object under a specific storage condition until the scheduled receiving time after arrival at the destination on the basis of the amount of heat calculated in the heat amount calculation step S3; and an output step S5 of outputting the refrigerant quantity calculated in the refrigerant quantity calculation step S4.

Fig. 15

EP 4 339 862 A1

## Description

**Technical Field**

The present invention relates to a storage assisting method, a storage assisting device and a program.

**Background Art**

Hitherto, there have been proposed various techniques for temperature control for transporting frozen foods such as ice cream to predetermined destinations. For example, at present, there is a proposed technique for a navigation sheet (information display) that displays information on a temperature adjustment material required for each heat/cold insulation container, thereby enabling a person in charge to install such a temperature adjustment material (refer to Patent Literature 1). Employing such a technique is considered to enable a manager or driver of a transportation company to refer to the navigation sheet for each heat/cold insulation container, determine the type, quantity, and the like of a necessary temperature adjustment material, and install the determined temperature adjustment material.

Citation List

Patent Document

Patent Document 1: Japanese Unexamined Patent Application Publication No. 2018-136705

**Summary of Invention**

Technical Problem

Meanwhile, in recent years, cases are increasing, where a recipient is not present at a destination, and a transported object is unloaded at the destination to complete the delivery. However, if unloading is casually carried out, temperature control during the waiting time from the time of arrival at the destination until the time of receipt cannot be properly performed, and there has been a risk of degrading the quality of the transported object. This problem of quality deterioration due to the waiting time between the arrival at the destination and the receipt becomes noticeable when the transported object is frozen (refrigerated) food.
The present invention has been made in view of the above-described circumstances, and a purpose of the invention is to provide a storage assisting method, a storage assisting device, and a program for assisting the storage, after arrival at a destination, of an object to be transported.

**Solution to Problem**

A first aspect of the present invention for fulfilling the above-described purpose is a storage assisting method implemented by a computer to assist storage, after arrival at a destination, of an object to be transported, including: an acquisition step of acquiring request information containing information on a type and a quantity of an object, a destination, and a scheduled receiving time for the object, and location information on a movable member within a container for packing the object, the movable member forming a heat-insulated closed space within the container; a heat amount calculation step of calculating an amount of heat the object receives until the scheduled receiving time after arrival at the destination on the basis of the request information, and information on a current temperature of the object and a heat transfer area of the container calculated on the basis of the location information; a refrigerant quantity calculation step of calculating a refrigerant quantity required for storing the object under a specific storage condition until a scheduled receiving time after arrival at the destination on the basis of the amount of heat calculated in the heat amount calculation step; and an output step of outputting the refrigerant quantity calculated in the refrigerant quantity calculation step.
Further, a second aspect of the present invention is a program for causing a computer to implement a method for assisting storage, after arrival at a destination, of an object to be transported, the method including: an acquisition step of acquiring request information containing information on a type and a quantity of an object, a destination, and a scheduled receiving time for the object, and location information on a movable member within a container for packing the object, the movable member forming a heat-insulated closed space within the container; a heat amount calculation step of calculating an amount of heat the object receives until the scheduled receiving time after arrival at the destination on the basis of the request information, and information on the heat transfer area of the container calculated on the basis of the location information, and a current temperature of the object; a refrigerant quantity calculation step of calculating a refrigerant quantity required for storing the object under a specific storage condition until a scheduled receiving time after arrival at the destination on the basis of the amount of heat calculated in the heat amount calculation step; and an output step of outputting the refrigerant quantity calculated in the refrigerant quantity calculation step.

Further, a third aspect of the present invention is a storage assisting device for assisting storage, after arrival at a destination, of an object to be transported, including: an acquisition unit that acquires request information containing information on a type and a quantity of an object, a destination, and a scheduled receiving time for the object, and location information on a movable member within a container for packing the object, the movable member forming a heat-insulated closed space within the container; a heat amount calculation unit that calculates an amount of heat the object receives until the scheduled receiving time after arrival at the destination on the basis of the request information, and information on the heat transfer area of the container calculated on the basis of the location information, and a current temperature of the object; a refrigerant quantity calculation unit that calculates a refrigerant quantity required for storing the object under a specific storage condition until a scheduled receiving time after arrival at the destination on the basis of the amount of heat calculated by the heat amount calculation unit; and an output unit that outputs the refrigerant quantity calculated by the refrigerant quantity calculation unit.

Employing such a method and configuration makes it possible to calculate the amount of heat an object receives from the arrival at a destination until a scheduled receiving time on the basis of the heat transfer area of a container calculated on the basis of the information of the location of a movable member in a container for packing the object, the movable member forming a heat-insulated closed space within the container, and the current temperature of the object to be transported, and the request information (the information on the type and the quantity of the object, the destination, the scheduled receiving time of the object, and the like), and to calculate, on the basis of the amount of heat, the refrigerant quantity required for storing the object under a specific storage condition after the arrival at the destination until the scheduled receiving time. Therefore, the object can be properly stored under the specific storage condition after the arrival at the destination until the scheduled receiving time.

In the storage assisting method according to the present invention, the output step may include a refrigerant quantity notification step in which the refrigerant quantity calculated in the refrigerant quantity calculation step is notified to a transporter of an object.

Employing such a method makes it possible to notify a transporter of an object of a calculated refrigerant quantity, thus enabling the transporter to use the notified refrigerant quantity so as to properly store the object under a specific storage condition until a scheduled receiving time after the arrival at a destination. Therefore, the quantity of refrigerant used can be optimized and the energy consumption required for cooling can be reduced.

In the storage assisting method according to the present invention, in the refrigerant quantity notification step, the refrigerant quantity can be notified to a transporter in response to an arrival notice sent from the transporter.

Employing such a method makes it possible to notify a transporter of a refrigerant quantity in response to an arrival notice sent from the transporter (i.e., when the transporter notifies the arrival of an object at a destination). Therefore, the information on the refrigerant quantity can be notified at a timing when the transporter who has arrived at the destination is waiting for the information, so that the possibility of transmitting the information on the refrigerant quantity to the transporter can be enhanced. Consequently, the transporter can be assisted in storage under proper storage conditions.

The storage assisting method according to the present invention may further include a refrigerant necessity notification step of notifying a transporter of an object of whether an additional refrigerant is necessary on the basis of a refrigerant quantity calculated in the refrigerant quantity calculation step. Similarly, the storage assisting device according to the present invention may further include a refrigerant necessity notification unit that notifies a transporter of an object of the necessity for an additional refrigerant on the basis of a refrigerant quantity calculated by the refrigerant quantity calculation unit.

Employing such a method and configuration enable a transporter of an object to quickly know whether an additional refrigerant is necessary and therefore to arrange for the refrigerant at a proper timing. Consequently, the transporter can be assisted in storage under proper storage conditions.

The storage assisting method according to the present invention may further include a refrigerant replenishment step in which a control command for replenishing a necessary additional refrigerant is sent out in the case where it is determined that an additional refrigerant is necessary on the basis of a refrigerant quantity calculated in the refrigerant quantity calculation step. Similarly, the storage assisting device according to the present invention may further include a refrigerant replenishment unit that sends out a control command for replenishing a necessary additional refrigerant in the case where it is determined that an additional refrigerant is necessary on the basis of a refrigerant quantity calculated by the refrigerant quantity calculation unit.

Employing such a method and configuration make it possible to send out a control command for replenishing a necessary additional refrigerant when it is determined that an additional refrigerant is necessary, so that the transporter of an object can be efficiently assisted with arranging for the refrigerant.

The storage assisting method according to the present invention may include a storage condition notification step in which a transporter of an object is notified of a storage condition.

Employing such a method makes it possible to notify the transporter of an object of a specific storage condition after the arrival at a destination until a scheduled receiving time, thus enabling the transporter to take appropriate measures to satisfy the notified storage condition.

The storage assisting method according to the present invention may further include an arrival notification step of notifying the arrival of an object to a client who requested the transportation of the object.

Employing such a method is advantageous in that a client who requested the transportation of an object can know the arrival of the object, and can therefore go to a destination to receive the object at any time from that point of time (even before a scheduled receiving time).

The storage assisting method according to the present invention may further include an object information notification step in which information on the type and quantity of an object is notified to a storage person who stores the object.

Employing such a method enables a storage person storing an object to acquire the information on the type and the quantity of the object and therefore to calculate the quantity of refrigerant to be transported together with the object and to hand, together with the object, the calculated quantity of the refrigerant to a transporter.

**Advantageous Effects of Invention**

According to the present invention, it is possible to provide a storage assisting method, a storage assisting device, and a program for assisting the storage, after arrival at a destination, of an object to be transported.

**Brief Description of Drawings**

Fig. 1 is a functional block diagram illustrating the functional configuration of a storage assisting device according to an embodiment of the present invention.

Fig. 2 is a configuration diagram illustrating the physical configuration of the storage assisting device according to the embodiment of the present invention.

Fig. 3 is a perspective view of a heat insulating container used in the embodiment of the present invention.

Fig. 4 is a plan view of a lid of the heat insulating container used in the embodiment of the present invention.

Fig. 5 is an explanatory diagram for explaining a location information acquisition unit that acquires the location information of the lid of the heat insulating container used in the embodiment of the present invention.

Fig. 6 is a plan view of a modified example of the lid of the heat insulating container used in the embodiment of the present invention.

Fig. 7 is a plan view of a modified example of the lid of the heat insulating container used in the embodiment of the present invention.

Fig. 8 is a plan view of a modified example of the lid of the heat insulating container used in the embodiment of the present invention.

Fig. 9 is a plan view of a modified example of the lid of the heat insulating container used in the embodiment of the present invention.

Fig. 10 is a plan view of a modified example of the lid of the heat insulating container used in the embodiment of the present invention.

Fig. 11 is a plan view of a modified example of the lid of the heat insulating container used in the embodiment of the present invention.

Fig. 12 is a plan view of a modified example of the lid of the heat insulating container used in the embodiment of the present invention.

Fig. 13 is a plan view of a modified example of the lid of the heat insulating container used in the embodiment of the present invention.

Fig. 14 is an explanatory diagram illustrating a case where a partition member is employed in place of the lid of the heat insulating container used in the embodiment of the present invention.

Fig. 15 is a flowchart for explaining each step of a storage assisting method according to an embodiment of the present invention.

**Description of Embodiments**

The following will describe an embodiment of the present invention with reference to the accompanying drawings. The embodiment described below is merely a preferred application example, and the scope of application of the present invention is not limited thereto.

<Storage assisting device>

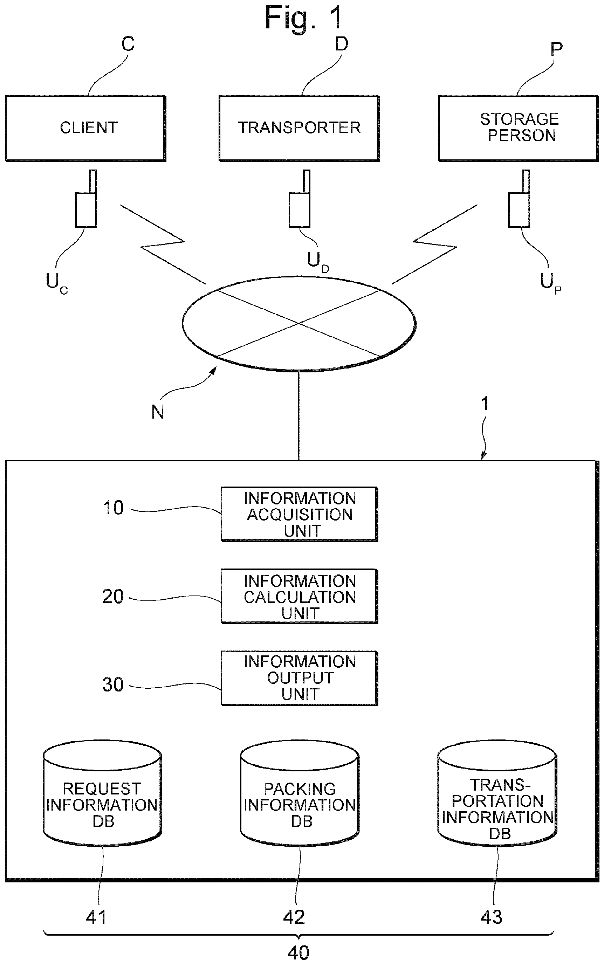

First, referring to Fig. 1, the functional configuration of a storage assisting device 1 according to an embodiment of the present invention will be described.

The storage assisting device 1 according to the present embodiment is adapted to assist the storage, after arrival at a destination, of an object transported in a refrigerated or frozen state, and includes an information acquisition unit 10 for acquiring various types of information such as request information sent from a client C requesting the transportation of an object, an information calculation unit 20 for calculating various types of information such as a refrigerant quantity, an information output unit 30 that outputs various types of information such as the refrigerant quantity calculated by the information calculation unit 20 to a transporter D and the like, and various types of databases 40 that record various types of information (a request information database 41, a packing information database 42, and a transportation information database 43). The term "object" in the present embodiment includes frozen foods such as ice cream that are transported in a frozen state, as well as various other foods transported in a refrigerated state (vegetables, fruits, meat, fresh fish, grains, tea leaves, coffee beans, and the like), flowers, medicines, and the like. In the present embodiment, a device and a method for assisting the storage, after arrival at a destination, of objects transported in a refrigerated (frozen) state will be exemplified; however, devices and methods that assist storage, after arrival at the destination, of objects transported at room temperature are also included in the scope of the present invention.

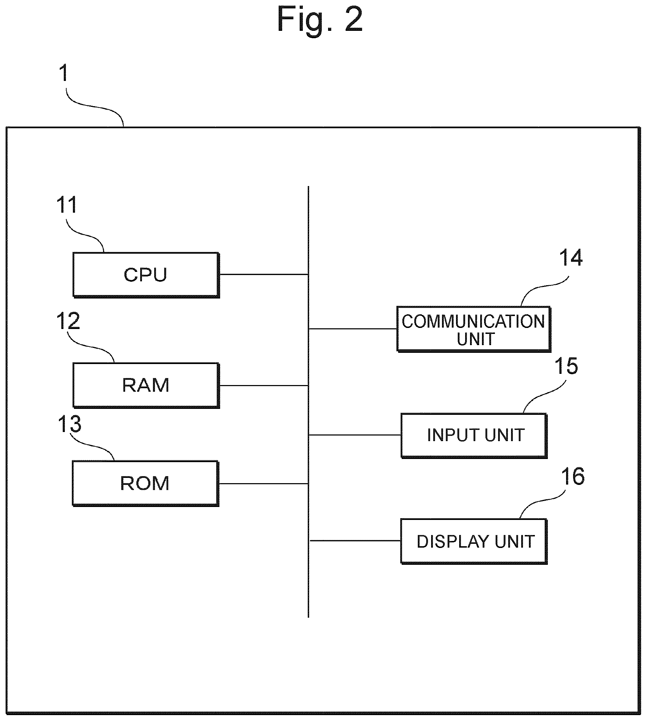

The information acquisition unit 10 functions to acquire request information sent from the client C and to accept various types of information input from a user of the storage assisting device 1, and is composed of a communication unit 14 (to be described later with reference to Fig. 2) and an input unit 15 (to be described later with reference to Fig. 2). As illustrated in Fig. 1, the request information is input to the information acquisition unit 10 of the storage assisting device 1 through a communication network N from a terminal $U_c$ owned by the client C. Various electronic devices (a desktop PC, a notebook PC, a smart phone, and the like) having an information display unit, an information input unit, and communication means can be employed as the terminal Uc. The communication network N is an information communication network capable of interconnecting a plurality of computers, and may be a global information communication network such as the Internet. The request information acquired through the information acquisition unit 10 is stored in the request information database 41.

The request information includes information on the type and quantity of an object (e.g., "ice cream (50 kg)," "meat (100 kg)," "fruits and vegetables (400 kg)," or "medicines (10 kg)"). In the present embodiment, the information on the containers for the types and quantities of objects have been recorded in the packing information database 42, and when the information acquisition unit 10 acquires the request information, the information on the container for the type and quantity of that object is read from the packing information database 42 and used for calculating a refrigerant quantity and the like, which will be described later.

Further, the request information includes the information on a destination to which an object is to be transported (e.g., "○-△-□ * * *, Setagaya-ku, Tokyo"). In the present embodiment, the transportation information corresponding to the information on destinations have been recorded in the transportation information database 43, and when the information acquisition unit 10 acquires the request information, the transportation information corresponding to the destination is read from the transportation information database 43 and used for calculating a transportation time and a scheduled arrival time, which will be described later.

Further, the request information includes information on the scheduled receiving time of an object (e.g., "C hr. D min. B date, month A, 2021). The information on the scheduled receiving time is used to calculate a refrigerant quantity, which will be described later. In the present embodiment, it is assumed that the client C receives an object after the time at which the object arrives at a destination, so that the scheduled receiving time is a time after the time when the object arrives at the destination.

The information calculation unit 20 functions to calculate the refrigerant quantity required for transporting an object (hereinafter referred to as "the transportation refrigerant quantity") on the basis of various types of information such as the request information acquired by the information acquisition unit 10, the information read from the various types of databases 40 (the packing information and the transportation information) based on the request information and the current temperature of the object (the temperature of the object at the time of arrival at the destination), and to calculate the refrigerant quantity required for keeping the object in cold storage under a specific storage condition after the arrival at the destination until the scheduled receiving time (hereinafter referred to as "the storage refrigerant quantity").

The information calculation unit 20 calculates the refrigerant quantity required for transporting the object (the transportation refrigerant quantity) according to the following procedure. Based on the request information (the information on the type and quantity of the object and the destination) acquired by the information acquisition unit 10, the information calculation unit 20 reads the information on a heat insulating container corresponding to the type and quantity of the object and the transportation information corresponding to the destination from the packing information database 42 and the transportation information database 43. Then, based on the information read from the transportation information database 43, the information calculation unit 20 calculates the transportation time and the scheduled arrival time, and calculates the transportation refrigerant quantity on the basis of the information on the calculated transportation time and the like and the information on the container read from the packing information database 42.

The information on the containers has been recorded in the packing information database 42, and the information corresponding to the type and quantity of the object acquired by the information acquisition unit 10 is selected and read. For example, if the object is "ice cream" and the quantity thereof is "50 kg," then a heat insulating container that is substantially shaped like a rectangular parallelepiped having a volume of 0.4 m$^3$ (length 50 cm, width 80 cm, and height 100 cm) is selected. Further, in the present embodiment, a heat recirculation rate K (Kcal/(m$^2$·h·°C)) and a heat transfer area A (m$^2$) of a heat insulating container are selected according to the type and quantity of an object. For example, if an object is "ice cream" and the quantity thereof is "50 kg," then the heat recirculation rate K of the heat insulating container is 0.3 (Kcal/(m$^2$·h·°C)) and the heat transfer area A is 2.6 (m$^2$). A specific example of the heat insulating container used in the present embodiment and a method for calculating the heat transfer area A will be described in detail later.

The transportation time required to transport an object to a destination can be calculated on the basis of initial information set in advance (the location information on the storage place of the object, the specifications of a transportation vehicle, and the like) and information on various types of transportation set from the information on the destination and the like (transportation routes, a transportation distance, and the like) in addition to the information on a destination included in the request information. The initial information and the information on the transportation have been recorded in the transportation information database 43 as the transportation information, and when the information on a destination is input as the request information, the transportation information on that destination is read from the transportation information database 43. For example, if the location information of the storage location of an object is "○○○-cho, Fukaya-shi, Saitama Prefecture (Fukaya Factory)," the location information of the destination is "△△△, Setagaya-ku, Tokyo (Setagaya Store)," and the transportation route is a "land route," then the estimated transportation distance can be calculated as "100 km," and the average cruising speed is estimated to be "50 km/h" on the basis of the specifications of a transportation vehicle, so that the transportation time is calculated as "2 hours." Then, the expected arrival time is calculated by adding the transportation time to a departure time.

The information calculation unit 20 calculates the transportation refrigerant quantity on the basis of the information of the container read from the packing information database 42 and the information on the calculated transportation time and the like as described above.

Further, the information calculation unit 20 can calculate the refrigerant quantity (the storage refrigerant quantity) required for the cold storage of an object under a specific storage condition after the arrival at a destination until a scheduled receiving time on the basis of the amount of heat the object receives after the arrival at the destination until the scheduled receiving time and the latent heat of the refrigerant. The above-described amount of heat can be calculated on the basis of the heat transfer area of a heat insulating container, the current temperature of an object, and the cold storage time of the object. For example, the information calculation unit 20 calculates a storage refrigerant quantity X according to the following procedure.

The information calculation unit 20 first calculates an amount of heat Q the object receives until the scheduled receiving time on the basis of the current temperature of the object (the temperature of the object at the time of the arrival at the destination) obtained through a temperature sensor (not illustrated) attached to the heat insulating container, and the request information acquired by the information acquisition unit 10. More specifically, the information calculation unit 20 calculates the amount of heat Q (Kcal) the object receives until the scheduled receiving time according to the expression given below on the basis of the heat recirculation rate K (Kcal/(m$^2$·h·°C)) and the heat transfer area A (m$^2$) of the heat insulating container mentioned above, an outside temperature t1 (°C) at the time of the arrival at the destination, a current temperature t2 (°C) of the object, and a cold storage time T (h) required from the time of the arrival at the destination until the scheduled receiving time. In other words, the information calculation unit 20 functions as a heat amount calculation unit in the present invention.

$$Q = K \times A \times (t1 - t2) \times T \ldots (1)$$

Subsequently, denoting the latent heat of the refrigerant used as H (Kcal/kg), the information calculation unit 20 can calculate the storage refrigerant quantity X (kg) by dividing the calculated amount of heat Q by the latent heat H.

$$X = Q/H \ldots (2)$$

The information on the latent heat H of the refrigerant used has been recorded in the packing information database 42. When the type and quantity of the object are acquired by the information acquisition unit 10, the information on the refrigerant for the type and quantity and the latent heat H thereof is read from the packing information database 42 and used to calculate the refrigerant quantity X. In other words, the information calculation unit 20 functions as the refrigerant quantity calculation unit in the present invention.

In the present embodiment, the heat transfer area A of the heat insulating container may be calculated on the basis of the information on the location of the lid in a heat insulating container. For example, the heat transfer area A can be calculated by adding an effective side area $A_s$ of a heat insulating container obtained by multiplying a distance d from the bottom surface of the heat insulating container to the lower surface of the lid thereof (the information on the location of the lid) by a length $L_s$ of the side surface of the heat insulating container, a bottom area As of the heat insulating container, and a lid area $A_L$. It is also possible to calculate the volume of the heat insulating container by multiplying the distance d from the bottom surface of the heat insulating container to the lower surface of the lid thereof (the information on the location of the lid) by the bottom area As of the heat insulating container. As will be described later, the information on the location of the lid can be acquired by a location information acquisition unit 130 or the like attached to at least either the heat insulating container or the lid thereof. As "the information on the location of a lid," it is also possible to employ a value r obtained by dividing the distance d by a depth $d_0$ (the distance from the bottom surface to the opening) of a heat insulating container ($= d/d_0$) in place of (or in addition to) the distance d from the bottom surface of the heat insulating container to the lower surface of the lid thereof. For example, the effective side area $A_s$ of the heat insulating container can be calculated by multiplying the value r by an entire side area $A_{so}$ of the heat insulating container. Here, the value obtained by subtracting the thickness of the lid from the depth $d_0$ of the heat insulating container is the maximum value of the distance d from the bottom surface of the heat insulating container to the lower surface of the lid.

Further alternatively, the storage refrigerant quantity X may be calculated on the basis of the amount of heat Q an object receives after the arrival at a destination until a scheduled receiving time, the latent heat H of the refrigerant, and a heat capacity C inside a heat insulating container. In this case, a refrigerant quantity with which a temperature change $\Delta t$ inside the heat insulating container after the arrival at a destination until a scheduled receiving time (or a temperature tr inside the heat insulating container at the scheduled receiving time) satisfies a predetermined condition can be calculated as the storage refrigerant quantity X. The heat capacity C inside the heat insulating container may be calculated from the volume of the heat insulating container or calculated on the basis of the location of the lid of the heat insulating container.

To be specific, the storage refrigerant quantity X can be calculated according to the following procedure. First, the information calculation unit 20 calculates the temperature change $\Delta t$ (°C) inside the heat insulating container until the scheduled receiving time according to the expressions given below on the basis of the heat recirculation rate K (Kcal/(m²·h·°C)) and the heat transfer area A (m²) of the heat insulating container described above, the outside temperature t1 (°C) at the time of the arrival at the destination, the current temperature t2 (°C) of the object, and the cold storage time T (h) required for a period of time from the time of the arrival at the destination to the scheduled receiving time, the latent heat H (Kcal/kg) of the refrigerant, and the heat capacity C (Kcal/°C) inside the heat insulating container.

$$\Delta t = \{K \times A \times (t1 - t2) \times T - H\} / C \ \dots \ (3)$$

The following expression that takes into account a positive or negative amount of heat $Q_{other}$ (Kcal) emitted by an object (e.g., respiratory heat) may be used.

$$\Delta t = \{K \times A \times (t1 - t2) \times T - H + Q_{other}\} / C \ \dots \ (3')$$

Alternatively, the temperature tr (°C) inside the heat insulating container at the scheduled receiving time is calculated according to the following expression instead of calculating the temperature change $\Delta t$ (°C) inside the heat insulating container until the scheduled receiving time.

$$tr = t2 + \{K \times A \times (t1 - t2) \times T - H\} / C \ \dots \ (4)$$

The following expression that takes into account a positive or negative amount of heat $Q_{other}$ (Kcal) emitted by an object (e.g., respiratory heat) may be used.

$$tr = t2 + \{K \times A \times (t1 - t2) \times T - H + Q_{other}\} / C \ \dots \ (4')$$

Subsequently, the information calculation unit 20 calculates the storage refrigerant quantity X with which the $\Delta t$ calculated according to expression (3) or expression (3') or tr calculated according to expression (4) or expression (4') satisfies a predetermined condition (e.g., within a predetermined range, equal to or less than a predetermined upper limit, or equal to or more than a predetermined lower limit).

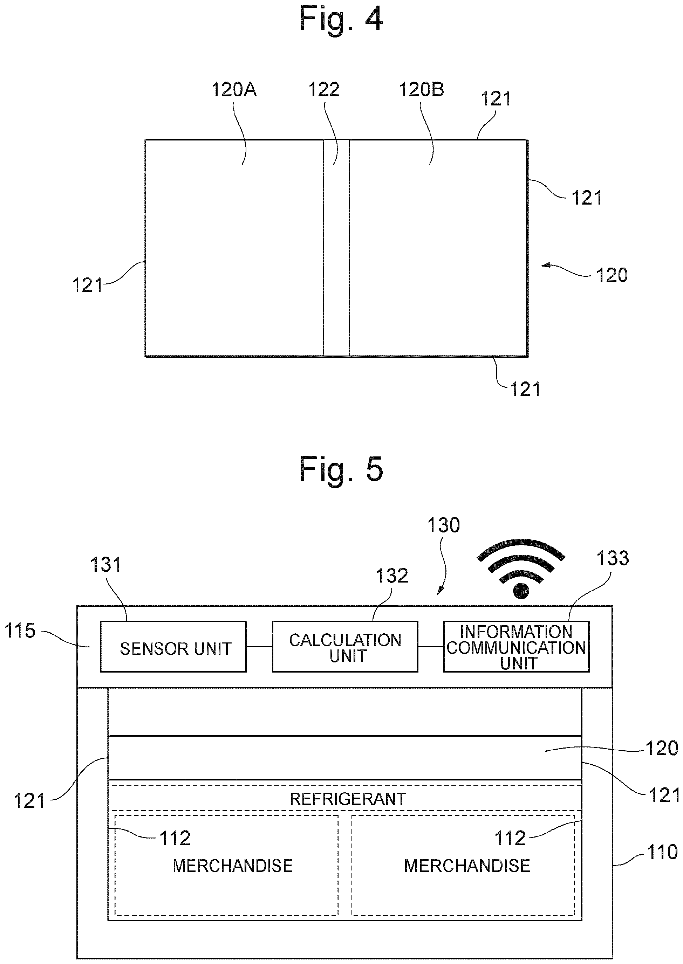

As the heat recirculation rate K used in expressions (1), (3), (3'), (4) and (4'), the heat recirculation rate for each member of a heat insulating container can be used in place or (or in addition to) the heat recirculation rate K of the entire heat insulating container. For example, a heat recirculation rate $K_S$ corresponding to a side surface member of a heat insulating container, a heat recirculation rate $K_B$ corresponding to a bottom surface member of the heat insulating container, or a heat recirculation rate $K_L$ corresponding to a lid member can be used. In this case, if a certain surface has a plurality of members, then a total value of the heat recirculation rates of the plurality of members may be used. More specifically, in Fig. 5, for example, the total value of the heat recirculation rate of a top board 115 (to be described later) and the heat recirculation rate of a lid 120 can be used as the heat recirculation rate $K_B$ of a lid member.

In the case where the heat recirculation rate for each member is used as described above, the product of the heat recirculation rate and the heat transfer area is determined for each member as the term of $K \times A$ in the above-described expressions (1), (3), (3'), (4) and (4'), and a value obtained by totaling the products may be used. In such a case, for example, as the term of $K \times A$, the following can be used:

$\Sigma Ki \times Ai$ (i denoting S corresponding to the side surface, B corresponding to the bottom surface, and L corresponding to the lid)

To be specific, the following expression obtained by modifying, for example, expression (1) can be used:

$$Q = (\Sigma Ki \times Ai) \times (t1 - t2) \times T$$

$$= (K_S \times A_S + K_B \times A_B + K_L \times A_L) \times (t1 - t2) \times T \dots (1')$$

A specific storage condition may be (1) a condition in which "the temperature change" of an object after a storage time T (h) elapses is within a predetermined range, equal to or less than a predetermined upper limit, equal to or more than a predetermined lower limit, or the like, or (2) a condition in which "the temperature" of the object after the storage time T (h) elapses is within a predetermined range, equal to or less than a predetermined upper limit, equal to or more than a predetermined lower limit, or the like. As described above, the information calculation unit 20 calculates the refrigerant quantity required for storing an object under such a condition (the storage refrigerant quantity).

The specific storage condition can be appropriately set according to the type, quantity and the like of an object. Examples include the following specific examples (a) to (f).

(a) Storage environment (outside temperature t1): 27°C; cold storage time T: 8 hours; and set temperature (the temperature of an object after cold storage time elapses): -18°C or lower

(b) Storage environment (outside temperature t1): 5°C; cold storage time T: 10 hours; and set temperature (the temperature of an object after cold storage time elapses): -18°C or lower

(c) Storage environment (outside temperature t1): 25°C; cold storage time T: 7 hours; current temperature of object: 20°C; and temperature change of object: within $\pm 2$°C

(d) Storage environment (outside temperature t1): 25°C; cold storage time T: 7 hours; current temperature of object: 5°C; and temperature change of object: within $\pm 2$°C

(e) Storage environment (outside temperature t1): 25°C; cold storage time T: a few days; current temperature of object: 5°C; and temperature change of object: within $\pm 3$°C

(f) Storage environment (outside temperature t1): actual measured value; cold storage time T: 3 hours; current temperature of object: actual measured value; and temperature change of object: within $\pm 2$°C

Specific example (f) assumes a case where fruits and vegetables (objects) that have arrived at a market are unloaded on the ground, and although the outside temperature t1 and the current temperature of the fruits and vegetables may vary depending on the situation at that time, the condition is that, at any rate, the temperature change after 3 hours elapses from unloading the fruits and vegetables are to remain within $\pm 2$°C from the current temperature.

When calculating the storage refrigerant quantity, the gas concentration in a heat insulating container may be taken into account. An oxygen concentration, a carbon dioxide concentration, or the like can be used as the gas concentration. Especially when the object is "fruits and vegetables," there is a correlation between the gas concentration and the respiratory rate. More specifically, when the oxygen concentration is high, the amount of respiration of fruits and vegetables increases (the respiratory heat increases) and the temperature of fruits and vegetables rises, so that it is necessary to increase the refrigerant quantity. On the other hand, when the oxygen concentration is low, the amount of respiration (respiratory heat) of fruits and vegetables is suppressed, and the temperature rise of fruits and vegetables is suppressed accordingly, thus making it possible to reduce the refrigerant quantity. Therefore, the storage refrigerant quantity may be calculated by taking into account the respiratory heat generated by fruits and vegetables according to a gas concentration. For example, if the oxygen concentration is higher (or lower) than a predetermined threshold value, then the storage refrigerant quantity can be increased (or decreased) in proportion to the difference from the threshold value.

The information output unit 30 functions to output various types of information such as the refrigerant quantity calculated by the information calculation unit 20 to the transporter D or the like, and is composed of the communication unit 14 (which will be described later with reference to Fig. 2) and a display unit 16 (which will be described later with reference to Fig. 2). The refrigerant quantity calculated by the information calculation unit 20 and various information read from the various types of databases 40 and used for the calculation of the refrigerant quantity are output from the information output unit 30 of the storage assisting device 1 to a terminal $U_D$ owned by the transporter D through the communication network N, as illustrated in Fig. 1. As with the terminal $U_C$, the terminal $U_D$ may employ various types of electronic devices having information display units, information input units, and communication means.

The information output unit 30 in the present embodiment is configured to output (notify), when an arrival notice sent from the transporter D is acquired through the information acquisition unit 10, the refrigerant quantity calculated by the information calculation unit 20 to the transporter D in response to the arrival notice. In this case, the information output unit 30 is configured to notify the transporter D of also storage conditions.

Further, the information output unit 30 is configured to output (notify), when request information is acquired through the information acquisition unit 10, information on the type and quantity of an object to a terminal $U_P$ of a storage person P who stores the object. As with the terminal Uc, the terminal $U_P$ can employ various types of electronic devices having information display units, information input units, and communication means. Further, the information output unit 30 is configured to output (notify), when an object arrives at a destination, the arrival of the object at the destination to a terminal $U_C$ of a client C.

Further, the information output unit 30 is also configured not only to notify the transporter D of the refrigerant quantity X calculated by the information calculation unit 20 but also to determine whether an additional refrigerant is necessary on the basis of the calculated refrigerant quantity X and notify the transporter D of the result of the determination. To be specific, the information output unit 30 compares a transportation refrigerant quantity calculated in advance with the refrigerant quantity X calculated this time (the storage refrigerant quantity) to determine whether an additional refrigerant is necessary, and if it is determined that the additional refrigerant is necessary, then the information output unit 30 notifies the transporter D to that effect. Meanwhile, when the information output unit 30 compares the transportation refrigerant quantity and the storage refrigerant quantity X and determines that no additional refrigerant is necessary, then the information output unit 30 also notifies the transporter D to that effect. In other words, the information output unit 30 functions also as the refrigerant necessity notification unit in the present invention.

In addition, if it is determined that an additional refrigerant is necessary on the basis of the refrigerant quantity X calculated by the information calculation unit 20, then the information output unit 30 sends out a control command for replenishing a necessary additional refrigerant. To be specific, if the information output unit 30 compares the transportation refrigerant quantity calculated in advance and the storage refrigerant quantity X calculated this time and determines that an additional refrigerant is necessary, then the information output unit 30 calculates how much refrigerant (e.g., 3 kg) should be added, and sends out a control command to a refrigerant replenishment device (not illustrated), such that the refrigerant that should be added (e.g., 3 kg) will be automatically supplied. The refrigerant replenishment device receiving such a control command supplies the refrigerant that should be added (e.g., 3 kg) to the transporter D. In other words, the information output unit 30 functions also as the refrigerant replenishment unit in the present invention.

Referring now to Fig. 2, the physical configuration for implementing the storage assisting device 1 according to the present embodiment will be described.

The storage assisting device 1 has a CPU (Central Processing Unit) 11, a RAM (Random Access Memory) 12, a ROM (Read Only Memory) 13, the communication unit 14, the input unit 15, and the display unit 16, as illustrated in Fig. 2, and these constituents are connected through a bus so as to enable mutual data transmission and reception. In this example, a description will be given of a case where the storage assisting device 1 is composed of a single computer; however, the storage assisting device 1 may be composed of a plurality of computers. For example, the display unit 16 may be composed of a plurality of displays. Further, the configuration illustrated in Fig. 2 is merely one example, and some of the constituents may be omitted. In addition, some of the constituents may be provided at a remote location. For example, a part of the ROM 13 may be provided at a remote location and may be configured to enable communication via a communication network.

The CPU 11 is an arithmetic unit that executes a computer program or the like recorded in the ROM 13 or the like thereby to perform arithmetic processing and the like in the present embodiment, and constitutes the information calculation unit 20. The CPU 11 includes a processor. The CPU 11 receives various types of information (including process data) from the RAM 12, the ROM 13, the communication unit 14, the input unit 15, and the like, and causes the display unit 16 to display arithmetic processing results and the like, and causes the RAM 12 and/or the ROM 13 to store the arithmetic processing results and the like.

The RAM 12 functions as a cache memory and can form a part of the information calculation unit 20. The RAM 12 may be composed of volatile semiconductor memory elements such as a SRAM and a DRAM.

The ROM 13 functions as a main memory and can form a part of the information calculation unit 20. The ROM 13 may be composed of a nonvolatile semiconductor memory element such as a flash memory, which allows information to be electrically rewritten, or an HDD, which allows information to be magnetically rewritten. The ROM 13 can store, for example, computer programs and data for performing various types of arithmetic processing in the present embodiment.

The RAM 12 and the ROM 13 constitute the various types of databases 40 (the request information database 41, the packing information database 42, and the transportation information database 43) of the storage assisting device 1.

The communication unit 14 is an interface for connecting the storage assisting device 1 to other devices, and constitutes the information acquisition unit 10 and the information output unit 30. The communication unit 14 is connected to the communication network N such as the Internet.

The input unit 15 accepts inputs of data from a user of the storage assisting device 1, and can constitute a part of the information acquisition unit 10. The input unit 15 may include, for example, a keyboard and a touch panel.

The display unit 16 visually displays calculation results given by the CPU 11, and can constitute a part of the information output unit 30. The display unit 16 may be composed of, for example, an LCD (Liquid Crystal Display).

In the physical configuration described above, each functional unit constituting the storage assisting device 1 can be implemented mainly by the CPU 11 executing computer programs. The storage assisting device 1 may be composed of a tablet terminal. Using a tablet terminal to constitute the storage assisting device 1 makes it possible to carry around the storage assisting device 1 and to operate the storage assisting device 1 while, for example, moving.

<Heat insulating container>

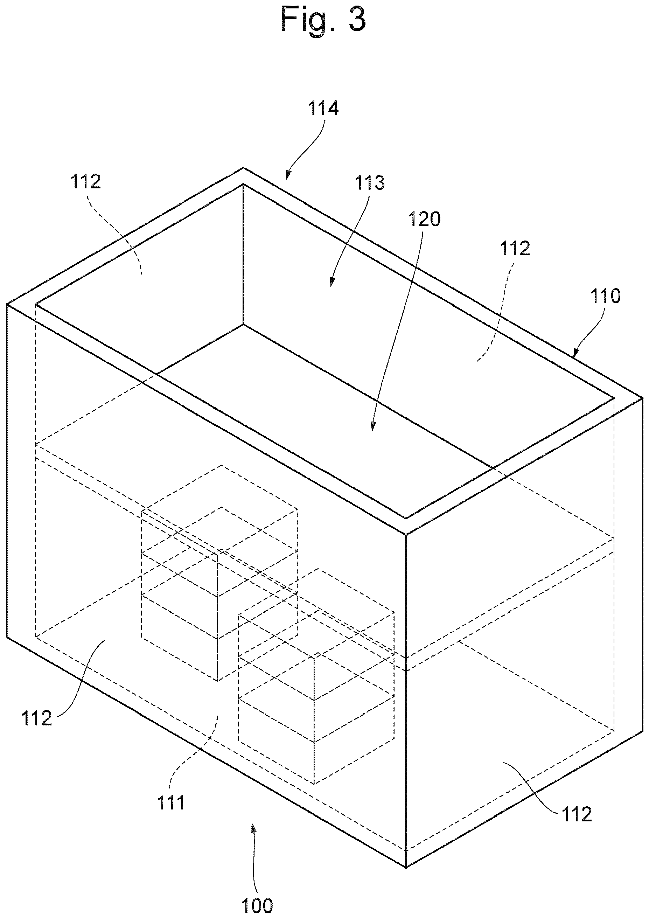

Referring now to Fig. 3 to Fig. 14, the configuration of a heat insulating container 100 used in the present embodiment will be described. As illustrated in Fig. 3, the heat insulating container 100 according to the present embodiment includes a container body 110 and a lid 120, and is used to hold therein an object such as frozen food together with a refrigerant for the purpose of transportation and storage.

As illustrated in Fig. 3, the container body 110 is configured to be substantially shaped like a rectangular parallelepiped having a bottom wall 111, which is substantially shaped like a rectangle in a plan view, and four side walls 112 connected in such a manner as to rise from the sides of the bottom wall 111. A storage space 113 having a substantially rectangular parallelepiped shape is formed by the bottom wall 111 and the side walls 112 of the container body 110, and an opening 114 continuous to the storage space 113 is formed in the top of the storage space 113.

Both the bottom wall 111 and the side walls 112 of the container body 110 are composed of heat insulating material panels having a predetermined thickness and having a substantially rectangular shape in a plan view. As such heat insulating material panels, for example, heat insulating material panels composed of a heat insulating material having a heat resistance of 50 $m^2 \cdot KI/W$ or less and a bending strength of 0.15 $N/mm^2$ or more can be employed. The vertical and horizontal dimensions and thickness of the heat insulating material panels constituting the bottom wall 111 and the side walls 112 can be appropriately set according to the type and the like of an object to be stored in the heat insulating container 100.

The lid 120 is a deformable, plate-shaped member, and is configured such that at least a part thereof is deformed when the lid 120 is inserted into the storage space 113 through the opening 114 of the container body 110 thereby to bring peripheral edges 121 into close contact with the inner surfaces of the side wall 112 of the container body 110. As illustrated in Fig. 4, the lid 120 in the present embodiment is divided into a plurality of sections (a first section 120A and a second section 120B), and is configured by connecting the first section 120A and the second section 120B to each other by a connecting elastic part 122, and has a substantially rectangular planar shape to fit the planar shape of the opening 114 of the container body 110.

The lid 120 is configured such that the connecting elastic part 122 is compressed thereby to reduce the interval between the first section 120A and the second section 120B so as to reduce the projected area thereof, and when the compression of the connecting elastic part 122 is released, the interval between the first section 120A and the second section 120B is increased thereby to increase the projected area thereof. In the present specification, the term "projected area" refers to the area of a shadow formed when light is applied from directly above an object being projected (e.g., the lid 120).

As with the bottom wall 111 and the side walls 112 of the container body 110, both the first section 120A and the second section 120B constituting the lid 120 can be configured using heat insulating material panels which have a predetermined thickness and are substantially rectangular in a plan view. For the connecting elastic part 122 connecting the first section 120A and the second section 120B, a bellows structure composed of a polyurethane sponge and aluminum-deposited PET (polyethylene terephthalate) can be employed. The combination of the air layer contained in the polyurethane sponge and the highly airtight aluminum-deposited PET can provide high heat insulation performance.

The vertical and horizontal dimensions and the thickness of the heat insulating material panels constituting the sections 120A and 120B of the lid 120, and the thickness of the connecting elastic part 122 when released from compression can be appropriately set according to the size of the opening 114 of the container body 110. In the present embodiment, the vertical and horizontal dimensions of the first section 120A and the second section 120B and the thickness of the connecting elastic part 122 when released from compression are set such that the projected area of the lid 120 in the state in which the connecting elastic part 122 is not being compressed is slightly larger than the projected area of the opening 114 of the container body 110.

The lid 120 with such a configuration is configured such that at least a part thereof is deformed in a state of being inserted into the storage space 113 through the opening 114 of the container body 110 so as to bring the peripheral edges 121 thereof into close contact with the inner surfaces of the side walls 112 of the container body 110. Therefore, a heat-insulated closed space composed of the bottom wall 111 of the container body 110, a part of the side walls 112 (the portions closer to the bottom wall 111) of the container body 110, and the lid 120 can be formed inside the storage space 113, thus making it possible to hold an object in the heat-insulated closed space for the purpose of transportation or the like. In this case, the volume of the heat-insulated closed space can be changed by changing the location of the lid 120 (the location where the peripheral edges 121 of the lid 120 and the side walls 112 of the container body 110 come in close contact) according to the volume of an object stored. In other words, the lid 120 in the present embodiment corresponds to the movable member in the present invention. For example, if the volume of an object stored reduces, then a heat-insulated closed space having a relatively small volume can be formed by shifting the location of the lid 120 toward the bottom wall 111 of the container body 110 and by bringing the peripheral edges 121 of the lid 120 into close contact with the side walls 112 of the container body 110. Therefore, even if the volume of an object stored changes, the volume of the heat-insulated closed space can be changed accordingly, so that the presence of air, which has high specific heat, inside the heat-insulated closed space can be suppressed, thus making it possible to suppress the deterioration of heat insulation efficiency.

In the present embodiment, as illustrated in Fig. 5, the location information acquisition unit 130, which detects the location of the lid 120 inside the container body 110 (the location where the peripheral edges 121 of the lid 120 and the side walls 112 of the container body 110 come in close contact), is provided on the top board 115 fixed to the opening 114 of the container body 110, so that the information on the location of the lid 120 detected by the location information acquisition unit 130 is sent to the information acquisition unit 10 of the storage assisting device 1. As illustrated in, for example, Fig. 5, the location information acquisition unit 130 can have a sensor unit 131 measuring the distance from the lower surface of the top board 115 to the upper surface of the lid 120, a calculation unit 132 calculating the distance from the upper surface of the bottom wall 111 of the container body 110 to the lower surface of the lid 120 on the basis of the distance measured by the sensor unit 131, the height of the side walls 112, and the thickness of the lid 120, and an information communication unit 133 sending the information on the distance calculated by the calculation unit 132 (i.e., the information on the location of the lid 120) to the information acquisition unit 10 of the storage assisting device 1. Here, the calculation unit 132 may be provided inside the storage assisting device 1 instead of being provided on the top board 115, and the information on the distance measured by the sensor unit 131 may be sent by the information communication unit 133 to the storage assisting device 1 to calculate the location information of the lid 120 by the storage assisting device 1.

The method for acquiring the location information of the lid 120 is not limited to the method based on calculation described above. For example, a configuration may be employed, in which the calculation unit 132 is omitted, and the sensor unit 131 is provided on the lid 120, so that the location information of the lid 120 measured by the sensor unit 131 (the distance from the upper surface of the bottom wall 111 of the container body 110 to the lower surface of the lid 120) is sent by wired or wireless transmission to the information communication unit 133 provided on the top board 115, thus making it possible to send the location information of the lid 120 to the storage assisting device 1 through the information communication unit 133. Further, a configuration may be employed, in which a plurality of stages of rails for locking the lid 120 are provided at predetermined intervals in the vertical direction on the inner surfaces of the side walls 112 of the container body 110, the sensor unit 131 is provided in the vicinity of each rail, the sensor unit 131 detects which stage of the rails the lid 120 is located on, and the information of the detected location is sent to the information communication unit 133 by wired or wireless transmission. Alternatively, a configuration may be employed, in which the upper areas and the lower areas of the inner surfaces of the side walls 112 of the container body 110 are colored with different colors in advance (for example, the upper 1/4 area of each of the side walls 112 of the container body 110 is colored red, while the lower 3/4 area is colored blue in advance), the sensor unit 131 detects in which color area the lid 120 is located, and the information of the detected location is sent to the information communication unit 133 by wired or wireless transmission.

The storage assisting device 1 uses the information on the location of the lid 120 acquired by the information acquisition unit 10 to calculate the heat transfer area A and the volume of the heat insulating container 100, and uses these heat transfer area A and the volume to calculate the refrigerant quantity X. Further, a temperature sensor (not illustrated) is provided inside the heat insulating container 100 (the heat-insulated closed space composed of the bottom wall 111 of the container body 110, a part of the side walls 112 (the portions closer to the bottom wall 111) of the container body 110, and the lid 120), so that the information on the temperature of an object stored can be detected in real time and sent to the information acquisition unit 10 of the storage assisting device 1.

The configuration of the heat insulating container 100 (the lid 120) does not necessarily have to be like the one described above, but other configurations may be used as long as the volume of the heat-insulated closed space can be changed by changing the location of a lid (the location where the peripheral edges of the lid and the side walls of the container body are in close contact) according to the volume of an object stored.

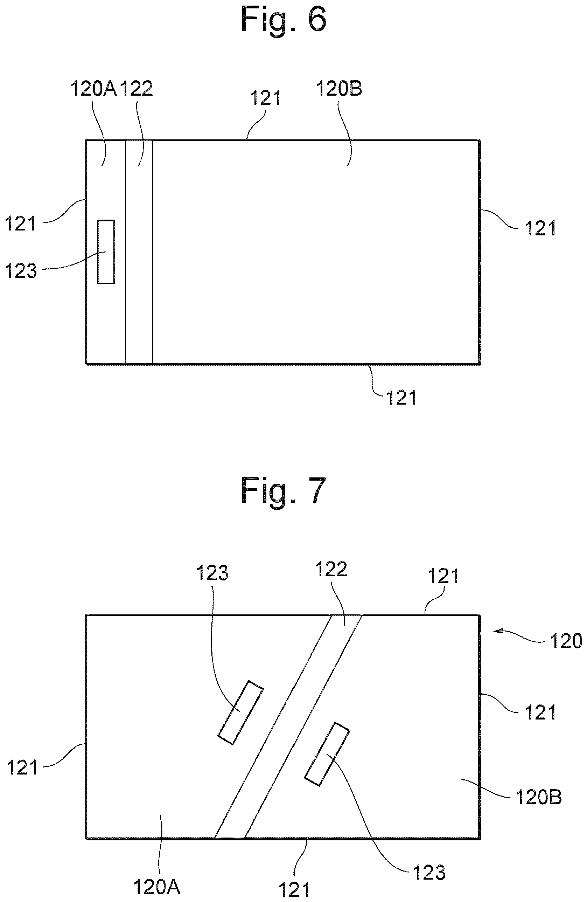

For example, Fig. 6 to Fig. 13 illustrate the modified examples of the heat insulating container 100 in the present embodiment.

The planar shapes of the first section 120A and the second section 120B constituting the lid 120 do not necessarily have to be the same, and for example, the area of the first section 120A may be set smaller and the area of the second section 120B may be set larger as illustrated in Fig. 6. Further, the planar shapes of the first section 120A and the second section 120B constituting the lid 120 do not necessarily have to be rectangular, and for example, the planar shapes of the first section 120A and the second section 120B may be trapezoidal as illustrated in Fig. 7, and these may be combined to constitute the lid 120 having a substantially rectangular shape in a plan view. The surface of at least one section of the lid 120 (only the first section 120A in Fig. 6, or the first section 120A and the second section 120B in Fig. 7) can be provided with a grip or grips 123 to be grasped by a user.

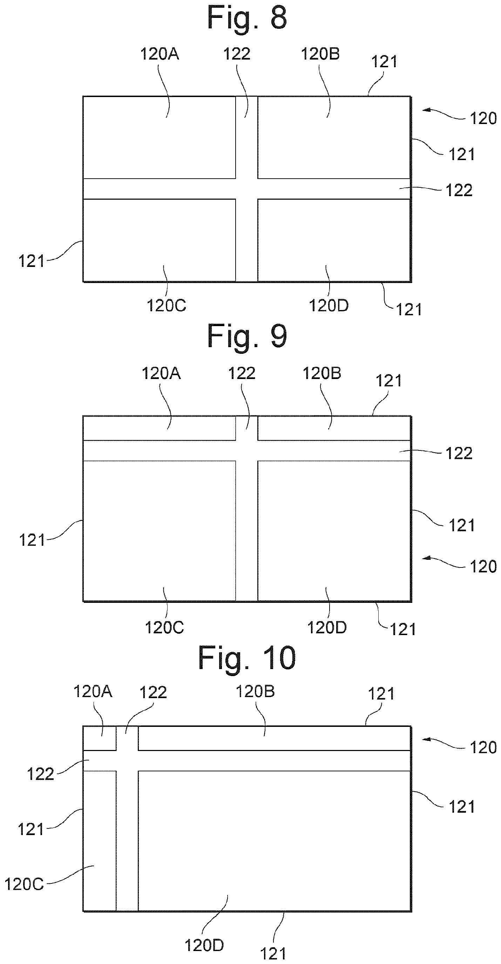

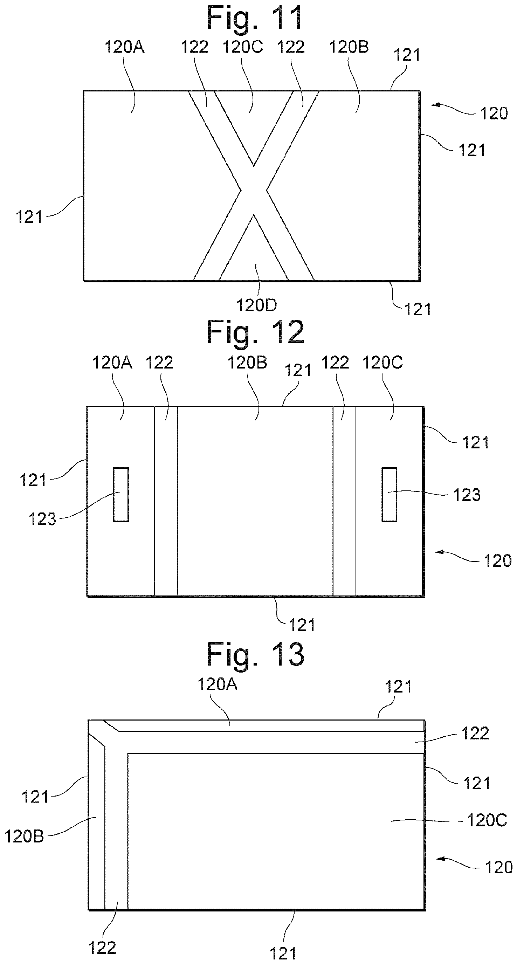

The number of the sections constituting the lid 120 does not necessarily have to be two, and the lid 120 may be divided, for example, into four sections (the first section 120A, the second section 120B, a third section 120C, and a fourth section 120D), as illustrated in Fig. 8 to Fig. 11, and these four sections may be connected by connecting elastic parts 122. Fig. 8 illustrates a modified example in which all the four sections have the same planar shape and the same area, Fig. 9 illustrates a modified example in which the areas of two out of the four sections are set smaller and the areas of the remaining two sections are set larger, and Fig. 10 illustrates a modified example in which all the four sections have different planar shapes and different areas. Further, while Fig. 8 to Fig. 10 illustrate the modified examples in which the planar shapes of the four sections are all rectangular (oblong), it is possible to set two out of the four sections to have pentagonal planar shapes and to set the remaining two to have triangular planar shapes, as in the modified example of Fig. 11. In any case, the planar shape of the lid 120 is substantially rectangular to fit the planar shape of the opening 114 of the container body 110.

Further, as illustrated in Fig. 12 and Fig. 13, the three sections (the first section 120A, the second section 120B, and the third section 120C) may be connected by the connecting elastic parts 122 to configure the lid 120 having a substantially rectangular shape in a plan view. Fig. 12 illustrates a modified example in which the sections having relatively small areas (the first section 120A and the third section 120C) are placed on both ends in the longitudinal direction of the lid 120, and are connected with the section having a relatively large area (the second section 120B) placed at the center in the longitudinal direction, and the grips 123 are provided on the surfaces of the two sections (the first section 120A and the third section 120C) placed on both ends in the longitudinal direction. Fig. 13 illustrates a modified example in which all three sections have different planar shapes and areas. In any case, the planar shape of the lid 120 is substantially rectangular to fit the planar shape of the opening 114 of the container body 110.

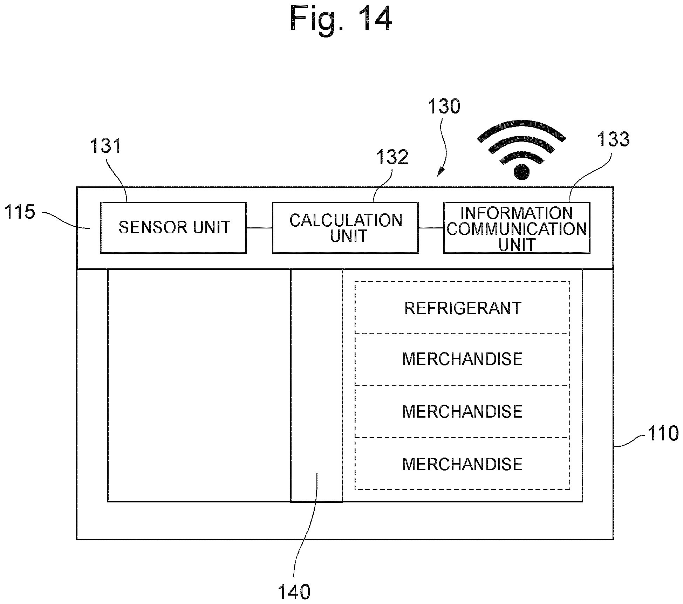

The member (movable member) for changing the volume of the heat-insulated closed space of the heat insulating container 100 is not limited to the lid 120, and a partition member 140, for example, illustrated in Fig. 14 can be employed in place of the lid 120. The partition member 140 can employ a configuration similar to the configuration of the lid 120 described above (a deformable, plate-shaped member configured such that at least a part thereof is deformed when inserted into a storage space 113 through the opening 114 of the container body 110 thereby to bring peripheral edges thereof into close contact with the upper surface of a bottom wall 111 of the container body 110 and the lower surface of a top board 115). In other words, the lid 120 described above with reference to Fig. 4 and Fig. 6 to Fig. 13 can be set up in the vertical direction to be used as the partition member 140. In addition, the location of the partition member 140 inside the container body 110 (the location where the peripheral edges of the partition member 140 are in close contact with the bottom wall 111 of a container body 110 and the top board 115) can be detected using the location information acquisition unit 130 as illustrated in Fig. 5, sent to the storage assisting device 1, and used to calculate a heat transfer area A or the like of the heat insulating container 100.

<Storage assisting method>

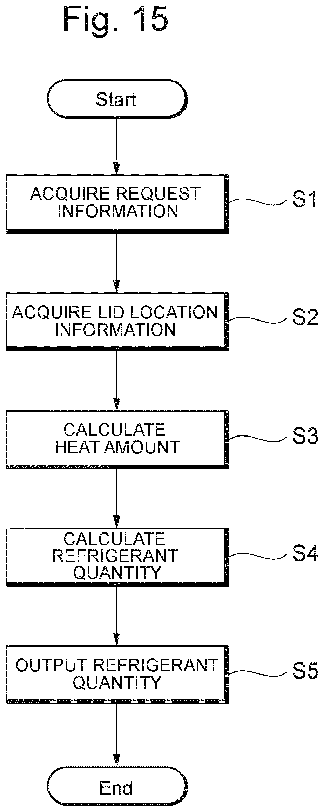

Subsequently, the storage assisting method according to the present embodiment will be described using the flowchart of Fig. 15. The method is implemented by a computer (the storage assisting device 1) to assist the storage, after arrival at a destination, of an object transported in a refrigerated or frozen state.

First, the information acquisition unit 10 of the storage assisting device 1 acquires request information sent via the communication network N from the terminal Uc owned by the client C (request information acquisition step: S1). As described above, the request information acquired in the request information acquisition step S1 includes the information on the type and quantity of an object, the information on a destination to which the object is to be transported, and the information on the scheduled receiving time of the object.

Further, the information acquisition unit 10 of the storage assisting device 1 acquires, through the location information acquisition unit 130 provided on the top board 115 of the heat insulating container 100, the information of the location, in the heat insulating container 100, of the lid (movable member) 120 for forming the heat-insulated closed space in the heat insulating container 100 packing the object (location information acquisition step: S2). The request information acquisition step S1 and the location information acquisition step S2 constitute the acquisition step in the present invention.

Subsequently, the information calculation unit 20 of the storage assisting device 1 calculates the amount of heat Q the object receives after the arrival at a destination until a scheduled receiving time on the basis of the request information acquired in the request information acquisition step S1, the heat transfer area A of the heat insulating container 100 calculated on the basis of the location information of the lid 120 acquired in the location information acquisition step S2, and the information on the current temperature of the object obtained through the temperature sensor attached to the heat insulating container 100 (the temperature of the object on the arrival at the destination) (heat amount calculation step: S3). The specific method for calculating the heat transfer area A and the amount of heat Q is as described above.

Subsequently, the information calculation unit 20 of the storage assisting device 1 calculates the refrigerant quantity (the storage refrigerant quantity) X required for performing cold storage of the object under a specific storage condition after the arrival at the destination until the scheduled receiving time on the basis of the amount of heat Q calculated in the heat amount calculation step S3 (refrigerant quantity calculation step: S4). The specific method for calculating the storage refrigerant quantity X is as described above.

Subsequently, the information output unit 30 of the storage assisting device 1 outputs (notifies) the refrigerant quantity X calculated in the refrigerant quantity calculation step S4 to the terminal $U_D$ owned by the transporter D through the communication network N (refrigerant quantity output step: S5). In this case, as described above, the information output unit 30 outputs (notifies) the refrigerant quantity X as well as the storage condition to the terminal $U_D$ of the transporter D in response to an arrival notice sent through the terminal $U_D$ from the transporter D. Further, the information output unit 30 notifies the transporter D of whether an additional refrigerant is necessary on the basis of the refrigerant quantity X calculated in the refrigerant quantity calculation step S4. In other words, the refrigerant quantity output step S5 includes the refrigerant quantity notification step, the storage condition notification step, and the refrigerant necessity notification step in the present invention.

Upon receipt of the notifications of the refrigerant quantity X, the storage condition, and the refrigerant necessity, the transporter D can properly adjust the refrigerant quantity X according to the information. For example, if the storage refrigerant quantity exceeds the transportation refrigerant quantity, then a required quantity of refrigerant is added to the transportation refrigerant quantity to obtain the storage refrigerant quantity. On the other hand, if the storage refrigerant quantity is less than the transportation refrigerant quantity (i.e., excessive cooling during transportation), then a required quantity of refrigerant is removed from the transportation refrigerant quantity to obtain the storage refrigerant quantity.

At the time when the request information is acquired through the information acquisition unit 10, the information output unit 30 outputs (notifies) the information on the type and quantity of the object to the terminal $U_P$ of the storage person P, who stores the object, and at the time when the object arrives at the destination, this fact is output (notified) to the terminal Uc of the client C. In other words, the information output unit 30 performs the object information notification step and the arrival notification step in the present invention. Further, when it is determined that an additional refrigerant is necessary on the basis of the refrigerant quantity X calculated in the refrigerant quantity calculation step S4, the information output unit 30 can send out a control command for replenishing a necessary additional refrigerant to a refrigerant replenishment device (not illustrated). The refrigerant replenishment device receiving such a control command can supply, to the transporter D, the refrigerant that should be added. In other words, the refrigerant replenishment step in the present invention can be performed by the information output unit 30.

In the storage assisting method according to the embodiment described above, the amount of heat Q an object receives after arrival at a destination until a scheduled receiving time can be calculated on the basis of the heat transfer area A of the heat insulating container 100 calculated on the basis of the information of location, inside the heat insulating container 100, of the lid 120 for forming the heat-insulated closed space inside the heat insulating container 100 packing the object, the current temperature of the object transported in a refrigerated or frozen state, and the request information (the information on the type and the quantity of the object, a destination, the scheduled receiving time of the object, and the like), and the refrigerant quantity required to perform cold storage of the object under a specific storage condition after the arrival at the destination until the scheduled receiving time (storage refrigerant quantity) X can be calculated on the basis of the above calculated amount of heat Q. Consequently, the cold storage of the object can be properly performed under a specific storage condition after the arrival at the destination until the scheduled receiving time.

Further, in the storage assisting method according to the embodiment described above, a calculated refrigerant quantity can be notified to the transporter D of an object, thus enabling the transporter D to use the notified quantity of refrigerant to properly store the object under a specific storage condition after the arrival at a destination until a scheduled receiving time.

Further, in the storage assisting method according to the embodiment described above, a refrigerant quantity can be notified to the transporter D in response to an arrival notice sent from the transporter D (i.e., when the transporter D notifies the arrival of the object at a destination). Consequently, the information on the refrigerant quantity can be notified at a timing when the transporter D who has arrived at the destination is waiting for the information, so that the possibility of transmitting the information on the refrigerant quantity to the transporter D can be enhanced.

Further, in the storage assisting method according to the embodiment described above, whether an additional refrigerant is necessary can be notified to the transporter D of an object on the basis of the calculated refrigerant quantity X. Hence, the transporter D of the object can quickly know whether an additional refrigerant is necessary and can therefore arrange for the refrigerant at a proper timing.

Further, in the storage assisting method according to the embodiment described above, if it is determined that an additional refrigerant is necessary on the basis of a calculated refrigerant quantity X, then a control command for replenishing a necessary additional refrigerant can be sent out, so that the transporter D of the object can be efficiently assisted with arranging for the refrigerant.

Further, in the storage assisting method according to the embodiment described above, a specific storage condition after the arrival at a destination until a scheduled receiving time can be notified to the transporter D of an object, thus enabling the transporter D to take appropriate measures to satisfy the notified storage condition.

Further, the storage assisting method according to the embodiment described above is advantageous in that the client C who requested the transportation of an object can know the arrival of the object at a destination, and can therefore go to the destination to receive the object at any time from that point of time (even before a scheduled receiving time).

Further, in the storage assisting method according to the embodiment described above, the storage person P storing an object can acquire the information on the type and the quantity of the object and can therefore calculate the quantity of refrigerant to be transported together with the object and hand, together with the object, the calculated quantity of the refrigerant to the transporter D.

The present invention is not limited to the embodiment described above, and any design modifications added as appropriate by those skilled in the art to these embodiment are also included in the scope of the present invention as long as such modifications have the features of the present invention. More specifically, each element provided in the above embodiment and the placement, the material, the condition, shape, size, and the like thereof are not limited to those illustrated and can be changed as appropriate. In addition, each element provided in the above-described embodiment can be combined to a technically possible extent, and any combinations of these are also included in the scope of the present invention as long as the combinations include the features of the present invention.

Reference Signs List

| 1   | storage assisting device |
| 10  | information acquisition unit |
| 20  | information calculation unit (heat amount calculation unit, refrigerant quantity calculation unit) |
| 30  | information output unit (refrigerant necessity notification unit, refrigerant replenishment unit) |
| 100 | heat insulating container |
| 120 | lid (movable member) |
| 140 | partition member (movable member) |
| S1  | request information acquisition step |
| S2  | location information acquisition step |
| S3  | heat amount calculation step |
| S4  | refrigerant quantity calculation step |
| S5  | refrigerant quantity output step (refrigerant necessity notification step, refrigerant replenishment step) |

Claims

1. A storage assisting method implemented by a computer to assist storage, after arrival at a destination, of an object to be transported, the method comprising:

an acquisition step of acquiring request information containing information on a type and a quantity of the object, the destination, and a scheduled receiving time for the object, and acquiring location information on a movable member within a container for packing the object, the movable member forming a heat-insulated closed space within the container;

a heat amount calculation step of calculating an amount of heat the object receives until the scheduled receiving time after arrival at the destination on the basis of the request information, and information on a current temperature of the object and a heat transfer area of the container calculated on the basis of the location information;

a refrigerant quantity calculation step of calculating a refrigerant quantity required for storing the object under a specific storage condition until the scheduled receiving time after arrival at the destination on the basis of the amount of heat calculated in the heat amount calculation step; and

an output step of outputting the refrigerant quantity calculated in the refrigerant quantity calculation step.

2. The storage assisting method according to claim 1, wherein the output step includes a refrigerant quantity notification step of notifying the refrigerant quantity calculated in the refrigerant quantity calculation step to a transporter of the object.

3. The storage assisting method according to claim 2, wherein, in the refrigerant quantity notification step, the refrigerant quantity is notified to the transporter in response to an arrival notice sent from the transporter.

4. The storage assisting method according to claim 1, further including a refrigerant necessity notification step of notifying a transporter of the object of whether an additional refrigerant is necessary on the basis of the refrigerant quantity calculated in the refrigerant quantity calculation step.

5. The storage assisting method according to claim 1, further including a refrigerant replenishment step of sending out a control command for replenishing a necessary additional refrigerant in the case where it is determined that an additional refrigerant is necessary on the basis of the refrigerant quantity calculated in the refrigerant quantity calculation step.

6. The storage assisting method according to claim 1, further including a storage condition notification step of notifying the storage condition to a transporter of the object.

7. The storage assisting method according to claim 1, wherein the request information is sent from a client requesting transportation of the object.

8. The storage assisting method according to claim 7, further including an arrival notification step of notifying the client of arrival of the object.

9. The storage assisting method according to claim 1, further including an object information notification step of notifying information on a type and a quantity of the object to a storage person who stores the object.

10. A program for causing a computer to implement a method for assisting storage, after arrival at a destination, of an object to be transported, the method including:

an acquisition step of acquiring request information containing information on a type and a quantity of the object, the destination, and a scheduled receiving time for the object, and acquiring location information on a movable member within a container for packing the object, the movable member forming a heat-insulated closed space within the container;

a heat amount calculation step of calculating an amount of heat the object receives until the scheduled receiving time after arrival at the destination on the basis of the request information, and information on a current temperature of the object and a heat transfer area of the container calculated on the basis of the location information;

a refrigerant quantity calculation step of calculating a refrigerant quantity required for storing the object under a specific storage condition until the scheduled receiving time after arrival at the destination on the basis of the amount of heat calculated in the heat amount calculation step; and

an output step of outputting the refrigerant quantity calculated in the refrigerant quantity calculation step.

11. A storage assisting device for assisting storage, after arrival at a destination, of an object to be transported, the device comprising:

an acquisition unit that acquires request information containing information on a type and a quantity of the object, the destination, and a scheduled receiving time for the object, and acquires location information on a movable member within a container for packing the object, the movable member forming a heat-insulated closed space within the container;
a heat amount calculation unit that calculates an amount of heat the object receives until the scheduled receiving time after arrival at the destination on the basis of the request information, and information on a current temperature of the object and a heat transfer area of the container calculated on the basis of the location information;
a refrigerant quantity calculation unit that calculates a refrigerant quantity required for storing the object under a specific storage condition until the scheduled receiving time after arrival at the destination on the basis of an amount of heat calculated by the heat amount calculation unit; and
an output unit that outputs the refrigerant quantity calculated by the refrigerant quantity calculation unit.

12. The storage assisting device according to claim 11, further including a refrigerant necessity notification unit that notifies a transporter of the object of whether an additional refrigerant is necessary on the basis of the refrigerant quantity calculated by the refrigerant quantity calculation unit.

13. The storage assisting device according to claim 11, further including a refrigerant replenishment unit that replenishes a necessary additional refrigerant in the case where it is determined that an additional refrigerant is necessary on the basis of the refrigerant quantity calculated by the refrigerant quantity calculation unit.

# Fig. 1

# Fig. 2

# Fig. 3

# Fig. 4

# Fig. 5

# Fig. 6

# Fig. 7

# Fig. 8

120A     122     120B     121

120

121

122

121           120C        120D     121

# Fig. 9

120A     122     120B     121

122

121          121

120

120C        120D     121

# Fig. 10

120A   122     120B     121

120

122               121

121

120C

120D     121

## Fig. 11

120A  122  120C  122  120B  121

121

120

121

121

120D  121

## Fig. 12

120A  122  120B  121  122  120C

121

121

123

123

121

120

121

## Fig. 13

120A  121

122

121

121

120B

120C

122  121  120

# Fig. 14

# Fig. 15

```
                    ┌──────────┐
                    │  Start   │
                    └────┬─────┘
                         │
                         ▼
            ┌─────────────────────────┐
            │   ACQUIRE REQUEST       │────  S1
            │     INFORMATION         │
            └───────────┬─────────────┘
                        │
                        ▼
            ┌─────────────────────────┐
            │  ACQUIRE LID LOCATION   │────  S2
            │     INFORMATION         │
            └───────────┬─────────────┘
                        │
                        ▼
            ┌─────────────────────────┐
            │     CALCULATE           │────  S3
            │    HEAT AMOUNT          │
            └───────────┬─────────────┘
                        │
                        ▼
            ┌─────────────────────────┐
            │     CALCULATE           │────  S4
            │     REFRIGERANT         │
            │      QUANTITY           │
            └───────────┬─────────────┘
                        │
                        ▼
            ┌─────────────────────────┐
            │  OUTPUT REFRIGERANT     │────  S5
            │      QUANTITY           │
            └───────────┬─────────────┘
                        │
                        ▼
                    ┌──────────┐
                    │   End    │
                    └──────────┘
```

## INTERNATIONAL SEARCH REPORT

| | International application No. |
|---|---|
| | **PCT/JP2022/020232** |

| A. CLASSIFICATION OF SUBJECT MATTER |
|---|
| *G06Q 10/08*(2012.01)i<br>FI: G06Q10/08 304 |

According to International Patent Classification (IPC) or to both national classification and IPC

| B. FIELDS SEARCHED |
|---|

Minimum documentation searched (classification system followed by classification symbols)

G06Q10/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2018-40500 A (PANASONIC INTELLECTUAL PROPERTY MANAGEMENT CO., LTD.) 15 March 2018 (2018-03-15)<br>entire text, all drawings | 1-13 |
| A | JP 2016-170494 A (PANASONIC INTELLECTUAL PROPERTY MANAGEMENT CO., LTD.) 23 September 2016 (2016-09-23)<br>entire text, all drawings | 1-13 |
| A | CN 108876238 A (YTO EXPRESS CO., LTD.) 23 November 2018 (2018-11-23)<br>entire text, all drawings | 1-13 |
| A | JP 2012-131546 A (GLOBERIDE INC.) 12 July 2012 (2012-07-12)<br>entire text, all drawings | 1-13 |
| A | JP 2014-126320 A (GLOBERIDE, INC.) 07 July 2014 (2014-07-07)<br>entire text, all drawings | 1-13 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 August 2022** | **16 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/020232**

| Patent document cited in search report | | | Publication date (day/month/year) | Patent family member(s) | | | Publication date (day/month/year) |
|---|---|---|---|---|---|---|---|
| JP | 2018-40500 | A | 15 March 2018 | CN | 107796157 | A | |
| JP | 2016-170494 | A | 23 September 2016 | (Family: none) | | | |
| CN | 108876238 | A | 23 November 2018 | (Family: none) | | | |
| JP | 2012-131546 | A | 12 July 2012 | (Family: none) | | | |
| JP | 2014-126320 | A | 07 July 2014 | (Family: none) | | | |

Form PCT/ISA/210 (patent family annex) (January 2015)

**EP 4 339 862 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018136705 A